# EUROPÄISCHE PATENTSCHRIFT

(11) **EP 0 678 482 B1**
(45) Veröffentlichungstag und Bekanntmachung des Hinweises auf die Patenterteilung: **29.10.1997**
(21) Anmeldenummer: 95104879.2
(22) Anmeldetag: 01.04.1995
(51) Int. Cl.: C03C 11/00, C03B 19/08, C03B 1/02, C03B 19/10

(54) **Verfahren zur Herstellung von Schaumglas-Formkörpern**
Method for the production of foam glass bodies
Procédé de production d'articles en verre mousse

(30) Priorität: 21.04.1994 DE 4413907
(43) Veröffentlichungstag der Anmeldung: 25.10.1995
(73) Patentinhaber: DENNERT PORAVER GmbH, 96130 Schlüsselfeld (DE)
(72) Erfinder: Dennert, Hans Veit, D-96130 Schlüsselfeld (DE)
(74) Vertreter: Rau, Manfred, Dr. Dipl.-Ing.

(56) Entgegenhaltungen:
- EP-A- 0 010 069
- EP-A- 0 484 643
- EP-A- 0 661 240
- DE-A- 1 496 635
- DE-A- 3 941 732

## Beschreibung

Die Erfindung bezieht sich auf ein Verfahren zur Herstellung von Schaumglas-Formkörpern und insbesondere von Schaumglas-Granulat.

Die DE-A-39 41 732 beschreibt ein Verfahren zur Herstellung von Schaumglas-Granulat, wobei eine 30 %-ige Wasserglaslösung, in der ein Treibmittel gelöst ist, mit gemahlenem Glaspulver im Verhältnis 1:9 kontinuierlich in einen Mischgranulator eindosiert und granuliert wird. In einem beheizten Drehrohr wird das Granulat verschäumt.

Die EP-A-0 0 10 069 beschreibt ein ähnliches Verfahren, bei dem Glasmehl mit einer dünnflüssigen Paste aus Wasser, Wasserglas, Glyzerin und Natriumbentonit vermischt und zu einem Rohgranulat geformt wird. Dieses wird anschließend getrocknet und danach bei zirka 700 °C gebläht.

Die EP-A-0 484 643 bezieht sich ebenfalls auf ein Verfahren zur Herstellung von Schaumglas-Granulat, wobei ein Binder mit gemahlenem Glaspulver granuliert und verschäumt wird. Als Binder kann eine Alkali-Silikatlösung eingesetzt werden.

Die nachveröffentlichte, jedoch auf eine ältere Patentanmeldung zurückgehende EP-A-0 661 240 offenbart ein Verfahren zur Herstellung von Schaumglas-Granulat, bei der eine Wasserglaslösung mit einem darin gelösten Treibmittel unter Zugabe zu gemahlenem Glaspulver granuliert, kompaktiert und verschäumt wird.

Die DE-A-14 96 635 beschreibt ein Verfahren zur Herstellung von Glaspellets mit Zellstruktur, bei dem eine vom Material des Kerns der Pellets verschiedenartige Glashaut zur Stabilisierung vorgesehen ist.

Bei einem aus der EP-B-0 052 693 bekannten Verfahren zur Herstellung von Schaumglas-Formkörpern wird eine Mischung zweier Glassorten, nämlich Glas mit vorzugsweise mehr als 16 Gew.-% Alkalioxid - sogenanntes "Stuckenglas" - und Glas mit weniger als 16 Gew.-% Alkalioxid - wofür beispielsweise Altglas verwendet werden kann - in feingemahlenem Zustand miteinander vermischt. Der Gewichtsanteil des Stückenglases liegt dabei zwischen 5% und 40%, kann jedoch laut der EP-B-0 170 978 auch deutlich darunter liegen, falls das hochwertige Glas einen höheren Alkalioxid-Anteil von beispielsweise über 25 Gew.-% aufweist.

Die vorgenannte Mischung wird unter Zugabe von Treibmitteln mit heißem Wasser versetzt und bis zum Ansteifen gerührt, wobei das Stückenglas in Lösung geht und eine Art Binder bildet, der den sogenannten Grünkörpern - also den zu schäumenden feuchten Granulatkörpern - Stabilität für das Handling während des Produktionsprozesses verleiht und im Endprodukt für die Strukturfestigkeit der Schaumglas-Formkörper verantwortlich ist. Statt der Verwendung von Stückenglas ist auch der Einsatz von viskosem oder getrocknetem Wasserglas denkbar, das bei Zusatz von Wasser zu der besagten Mischung ebenfalls in Lösung geht und einen glasähnlichen Binder bildet. Bei dem getrockneten Wasserglas handelt es sich um ein Alkali-Silikat in Pulver- oder Granulatform.

Laut der EP-B-0 052 693 muß das Verhältnis Wasser : Gesamtfeststoff wie 1 : 1,4 ... 2,5 betragen. Der Grund hierfür liegt darin, daß für den Aufschluß des Stückenglases und dessen Lösung bzw. die des Wasserglases genügend "freies" Wasser vorhanden sein muß. Insofern muß mit einem Wasserüberschuß gearbeitet werden, da sich ein Teil des zur oben genannten Mischung zugegebenen Wassers physikalisch an das minderwertige Glas anlagert und somit nicht für den Aufschluß und die Lösung des Glas- oder glasähnlichen Binders zur Verfügung steht. Dieser Wasserüberschuß führt dazu, daß der Feuchtigkeitsgehalt der zu Schaumglas-Formkörpern weiter zu verarbeitenden Mischung - der sogenannten "Grünmischung" - zwischen 40 und 70% liegt.

Eine Grünmischung mit einem derart hohen Feuchtigkeitsgehalt kann ohne weitere Behandlung weder zu Grünkörpern verformt noch bei Temperaturen um 750 bis 1000°C beispielsweise in einem Drehrohrofen verschäumt werden. Für eine Reduktion des Feuchtigkeitsgehalts z.B. durch Vortrocknung auf einen Feuchtigkeitsgehalt von max. 20% ist ein erheblicher Energiebedarf notwendig. Darüber hinaus muß in die Herstellungsanlage für die Schaumglas-Formkörper eine Trocknungsstufe eingebaut werden, die einen erheblichen Investitionsaufwand mit sich bringt.

Ein weiterer Nachteil des hohen Feuchtigkeitsgehaltes der Grünmischung liegt darin, daß solche Mischungen nicht granulierbar sind. Dazu muß der Feuchtigkeitsgehalt bekanntermaßen im Bereich zwischen 5 und max. 20% liegen. In der Praxis wurde daher die Grünmischung mit auf einen Restfeuchtigkeitsgehalt von 0% bis 2% getrocknetem Grünkorn versetzt, das von der Ausgangsseite der Trocknungsstufe abgezogen, im Rückfluß gegebenenfalls kleingemahlen und der Mischung in einem Mengenanteil von z.B. 55% zugegeben wird. Durch diese Zugabe sinkt der Feuchtigkeitsgehalt der Grünmischung in Bereiche, in denen sie granulierbar und anschließend verschäumbar wird. Wie ohne weiteres erkennbar ist, wird durch diese Maßnahme die Kapazität der Trocknungs- und Granulier-Station jedoch drastisch reduziert, so daß dieser Anlagenteil eine mehr als doppelte Kapazität verglichen mit den verbleibenden Anlagenteilen haben muß. Der Aufbau der Anlage wird durch den Rückführungszweig und die darin angeordnete Mahlvorrichtung aufwendiger und ihr spezifische Energiebedarf erheblich erhöht.

Der Erfindung liegt die Aufgabe zugrunde, ein Verfahren zur Herstellung von Schaumglas-Formkörpern und insbesondere von Schaumglas-Granulat anzugeben, mit dem durch aufeinander abgestimmte Verfahrensmaßnahmen und -bestandteile erhebliche Energieeinsparungen erzielbar sind und das einen erheblich einfacheren Aufbau der Herstellungsanlage für die Schaumglas-Formkörper bedingt.

Diese Aufgabe wird durch die im Patentanspruch 1 angegebenen Verfahrensmerkmale gelöst. Dabei wird anfangs des Verfahrens lediglich der Glas-Binder mit Wasser und gegebenenfalls Treibmittel unter Bildung einer fließfähigen Binder-Schlempe vermischt. Dabei genügt es, wenn das Wasser in einer derartigen Menge eingebracht wird, wie sie für die Feuchte-Einstellung der sogenannten Grünmischung - also der feuchten Mischung aus Binder-Schlempe und Glasmehl, wie sie als Zwischenstadium vor dem Verschäumen vorliegt - zur Bildung der Grünkörper - also der noch feuchten, anschließend der Schäumung auszusetzenden Rohkörper - genügt. Da beim Anmachen der Binder-Schlempe diese Wassermenge vollständig für den Aufschluß und die Lösung des Glas-Binders zur Verfügung steht, braucht im Gegensatz zum Stand der Technik gemäß EP-B-0 052 693 nicht mit einem Wasserüberschuß gearbeitet werden. Folglich kann die Vortrocknung der Grünmischung bzw. die Rückführung und Mahlung von getrockneten Grünkörpern vollständig entfallen, um die Granulierung der feuchten Grünmischung bzw. die Schäumung der Grünkörper durchführen zu können.

Für die Binderschlempe wird als Glas-Binder feingemahlenes, hochwertiges Stückenglas mit einem Alkalioxid-Anteil von vorzugsweise mehr als 16% verwendet, das durch Verrühren mit heißem Wasser bei einer Temperatur von 50°C bis vorzugsweise 95°C aufgeschlossen wird und in Lösung geht.

Nach dem Anmachen der fließfähigen Binder-Schlempe wird diese in Glasmehl, das vollkommen trocken ist oder auch eine gewisse Restfeuchte aufweisen kann, eingebracht, also z.B. in dieses eingesprüht, wodurch die besagte feuchte Grünmischung mit dem gewünschten Feuchtigkeitsgehalt für eine Granulierung oder - allgemeiner ausgedrückt - eine Formung erhalten wird. Auf letztere wird im Zusammenhang mit den Unteransprüchen noch näher eingegangen werden.

Nach dieser Formung werden die damit gebildeten Grünkörper in einem Ofen - beispielsweise einem Drehrohrofen - bei Temperaturen von 750°C bis 1000°C zu den Schaumglas-Formkörpern verschäumt, wobei naturgemäß die in den Grünkörpern enthaltene Feuchtigkeit entzogen wird. Es kann, falls besondere Umstände vorliegen, die Grünmischung vorgetrocknet werden, wobei der für diese gesonderte Vortrocknung notwendige Energiebedarf aufgrund des niedrigeren Feuchtigkeitsgehalts der Grünmischung geringer ist als beim Stand der Technik.

Zusammenfassend können insbesondere durch den Wegfall der gesonderten Trocknung der Grünkörper, aber auch durch die verringerten Betriebs- und Investitionskosten für die Herstellungsanlage aufgrund des Wegfalls der Rückführung und Mahlung eines großen Anteils von getrockneten Grünkörpern die Kosten für die Herstellung solcher Schaumglas-Formkörper dank des erfindungsgemäßen Verfahren erheblich gesenkt werden. Einsparungen bei den Investitionskosten und beim Energieverbrauch in der Größenordnung von 25% sind möglich.

Im Zusammenhang mit dem notwendigen Treibmittel zur Aufschäumung der Schaumglas-Formkörper ist anzumerken, daß hierfür alle üblichen Treibmittel, wie Natronsalpeter, eine Mischung aus Soda, Harnstoff und Wasserstoffperoxid, Natronlauge, Braunstein, Zucker usw. eingesetzt werden können. Die Zumischung der Treibmittel erfolgt vorzugsweise bei der Bildung der fließfähigen Binder-Schlempe. Ein Einmischen in das Glasmehl vor oder gleichzeitig mit dem Einbringen der fließfähigen Schlempe in das Glasmehl ist ebenfalls denkbar.

Die Ansprüche 2 bis 4 betreffen verschiedene Verfahrensweisen beim Einmischen der Binder-Schlempe in das Glasmehl und die Formung der Grünkörper. So ist es nach Anspruch 2 möglich, das Glasmehl in einen Mischer, vorzugsweise einen Pflugscharmischer, zu geben, in den die Binder-Schlempe zudosiert wird. Es bilden sich vorzugsweise feinkörnige Granulat-Grünkörper.

Wie aus dem Vorstehenden deutlich wird, erfolgen das Zusammenmischen von Binder-Schlempe und Glasmehl und die Bildung von Granulat-Grünkörpern integral in einem Verfahrensschritt.

Eine weitere integrale Misch- und Formungstechnik ist im Anspruch 3 angegeben, wonach zur Bildung der Grünmischung und zur Formung der Grünkörper das Glasmehl und die Binder-Schlempe in einen üblichen Granulierteller eindosiert bzw. gesprüht werden, so daß sich vorzugsweise grobkörnige Granulat-Grünkörper bilden.

In einem zweistufigen Verfahren, wie es in Anspruch 4 angegeben ist, können Granulat-Grünkörper, wie sie beispielsweise in einem Pflugscharmischer hergestellt wurden, in einen Granulierteller gegeben werden, wo durch Zugabe weiterer Binder-Schlempe und weiteren Glasmehls mit entsprechenden Mengenanteilen eine Aufgranulierung, also eine Kornvergrößerung der Granulat-Grünkörper stattfinden kann.

Gemäß den Ansprüchen 5 und 6 kann mittels eines Granuliertellers eine sich in ihren Eigenschaften von den Grundeigenschaften des Granulat-Grünkörpers unterscheidende Außenschicht auf die Grünkörper aufgebracht werden. Hierbei kann es sich um ein Glasmehl-Binder-Gemisch mit einem geringeren Anteil an Treibmittel handeln, so daß die Granulat-Grünkörper eine weniger schäumfähige Außenhaut aufweisen. Diese Außenhaut ist dann am fertigen Schaumglas-Granulatkörper fester und dichter, was insgesamt zu einem stabileren und eine geringere Wasseraufnahmefähigkeit aufweisenden Schaumglas-Granulatmaterial führt. Auch kann in diesem Verfahrensschritt eine Trennmittelschicht aufgepudert werden, die ein Zusammenkleben der Granulat-Grünkörper verhindert. Ein Aufbringen einer Farbschicht oder einer Glasierung z.B. zur Verminderung der Wasseraufnahmefähigkeit der fertigen Schaumglas-Granulatkörper ist ebenfalls möglich. Im übrigen ist darauf hinzuweisen, daß die in den Ansprüchen 5 und 6 angegebenen Maßnahmen auch bei Granulat-Grünkörpern anwendbar sind, die mit einem vom erfindungsgemäßen Verfahren abweichenden Verfahren hergestellt wurden.

Anspruch 7 kennzeichnet eine weitere bevorzugte Ausgestaltung des erfindungsgemäßen Verfahrens, wonach die Granulat-Grünkörper in einer Formpresse - also beispielsweise zwischen einem Walzenpaar oder in einer Brikettier- bzw. Tablettiermaschine - zu größeren Form-Grünkörpern verpreßt werden, um fladen-, zylinder-, pellet-, brikett-, splittförmige, großstückige, bruchstückartige od. dgl. geformte Schaumglas-Formkörper zu bilden. So können beim Pressen z.B. Fladen geformt werden, die während oder nach dem Verschäumen zu groben SchaumglasBruchstücken zerfallen oder zu diesen zerkleinert werden.

Zum Verschäumen der Grünkörper kann ein sogenannter Bandofen verwendet werden. Allerdings hat sich in diesem Zusammenhang eher ein Drehrohrofen bewährt, wie dies in Anspruch 8 angegeben ist.

Nach Anspruch 9 wird der Feuchtigkeitsgehalt der aus Binder-Schlempe und Glasmehl gebildeten feuchten Grünmischung durch die Wasserzugabe beim Anmachen der Binder-Schlempe auf einen Bereich zwischen 3% und 20% eingestellt. Dieser Bereich hat sich als besonders vorteilhaft zur Bildung von Schaumglas-Granulatkörpern herausgestellt.

Bezogen auf die Gesamtmenge. der feuchten Grünmischung haben sich folgende Anteile der einzelnen Grund-Bestandteile für die Schaumglas-Formkörper als vorteilhaft ergeben:
- Glas-Binder 2% bis 12%
- Glasmehl, insbesondere Altglasmehl 70% bis 95%
- Treibmittel 0,2% bis 2,5%
- Wasser 3% bis 20%.

Nach Belieben können andere Zusatzstoffe zugegeben werden, um bestimmte Materialeigenschaften zu erzielen, wie z.B. Hydrophobierungsmittel, die die Schaumglas-Formkörper wasserabweisend machen.

Die Erfindung wird anhand eines Ausführungsbeispieles betreffend die Herstellung eines feinkörnigen Schaumglas-Granulats im folgenden näher erläutert.

Folgende Bestandteile werden eingesetzt:
- Altglasmehl 1349 kg
- feingemahlenes Stückenglas (Korngröße zu 95% unter 0,1 mm) 175 kg
- Treibmittel Natronsalpeter 14 kg
- Wasser 338 kg

Das feingemahlene Stückenglas, die Treibmittel-Mischung und das Wasser mit einer Temperatur von ca. 80° werden in einen Rührwerksbehälter eingegeben und ca. 30 Minuten gerührt. Es entsteht eine Binder-Schlempe, die fließ- und sprühfähig ist.

Das Altglasmehl wird in einen Pflugscharmischer eindosiert und die angemachte Binder-Schlempe ebenfalls dosiert in den Pflugscharmischer eingesprüht. Dieser Arbeitsgang kann kontinuierlich in einem Durchlaufmischer oder periodisch mit einem Chargenmischer erfolgen. Es bilden sich aus der Binder-Schlempe und dem Altglasmehl feinkörnige Granulat-Grünkörper mit 18% Feuchtigkeit, die anschließend getrocknet (Restfeuchte 0% bis 2%) und dann in einem Drehrohrofen bei einer Temperatur von 780°C während einer Zeit von 7 Minuten verschäumt werden. Das erhaltene feinkörnige Schaumglas-Granulat weist eine Korngröße von < 4 mm auf.

Es ist darauf hinzuweisen, daß die fertig verschäumten Schaumglas-Granulatkörper in heißem Zustand in ein Vorratssilo eingegeben werden können, wo sie langsam und schonend abkühlen können. Diese "heiße Lagerung" der Granulatkörper wirft dabei am Silo deshalb keine Probleme auf, da Schaumglas eine sehr geringe Wärmeleitfähigkeit hat, so daß die Hitze innerhalb der Granulatschüttung im Silo verbleibt, und somit das Silo selbst nicht über Gebühr erwärmt wird. Zur Unterstützung der Kühlung kann das Silo mit vertikal hindurchlaufenden Röhren versehen sein, durch die nach dem Kamin-Prinzip Luft von unten nach oben durchströmen kann. Die erwärmte Luft kann z.B. zur Vorwärmung der Brennerluft für den Drehrohrofen verwendet werden, wenngleich dies beim erfindungsgemäßen Verfahrens keineswegs notwendig ist. Die o.a. Lagerung der Schaumglas-Formkörper ist besonders vorteilhaft bei mittleren und großen Formkörpern, da diese bei zu schneller Abkühlung sehr stark zur Bildung von Gefügerissen neigen, womit ein Verlust der Form sowie ein starker Festigkeitsverlust verbunden ist.

## Patentansprüche

1. Verfahren zur Herstellung von Schaumglas-Körpern, insbesondere von Schaumglas-Granulat, mit folgenden Verfahrensschritten:
- Vermischen eines Glas-Binders mit Wasser und Treibmittel unter Bildung einer fließfähigen Binder-Schlempe,
- Einbringen der fließfähigen Binder-Schlempe in Glasmehl, vorzugsweise Altglasmehl unter Bildung einer feuchten Grünmischung,
- Formung der feuchten Grünmischung unter Bildung von Grünkörpern und
- Verschäumen der Grünkörper in einem Ofen zu den Schaumglas-Formkörpern, dadurch gekennzeichnet, daß als Glas-Binder feingemahlenes Stückenglas mit einem Alkalioxid-Anteil von vorzugsweise mehr als 16% verwendet wird, welches Stückenglas durch Verrühren mit heißem Wasser aufgeschlossen wird und in Lösung geht.

2. Verfahren nach Anspruch 1, dadurch gekennzeichnet, daß das Glasmehl zur Bildung der feuchten Grünmischung mit der Binder-Schlempe und zur Formung der Grünkörper in einen Mischer, vorzugsweise einen Pflugschar- oder Sprühmischer gegeben wird, in den die Binder-Schlempe zudosiert wird, so daß sich vorzugsweise feinkörnige Granulat-Grünkörper bilden.

3. Verfahren nach Anspruch 1, dadurch gekennzeichnet, daß zur Bildung der feuchten Grünmischung und zur Formung der Grünkörper das Glasmehl und die Binder-Schlempe gemeinsam in einen Granulierteller eingebracht werden, so daß sich vorzugsweise grobkörnige Granulat-Grünkörper bilden.

4. Verfahren nach Anspruch 2, dadurch gekennzeichnet, daß die Granulat-Grünkörper in einen Granulierteller gegeben werden, wo durch Zugabe weiterer Binder-Schlempe und weiteren Glasmehls eine Kornvergrößerung der Granulat-Grünkörper stattfindet.

5. Verfahren nach einem der Ansprüche 2 bis 4, dadurch gekennzeichnet, daß das mittels eines Granuliertellers eine sich in ihren Eigenschaften von den Grundeigenschaften der Granulat-Grünkörper unterscheidende Außenschicht auf die Granulat-Grünkörper aufgebracht wird.

6. Verfahren nach Anspruch 5, dadurch gekennzeichnet, daß als Außenschicht eine weniger schäumfähige Außenhaut, eine Trennmittelschicht, eine Farbschicht und/oder eine Glasierschicht aufgebracht werden.

7. Verfahren nach einem der Ansprüche 2 bis 4, dadurch gekennzeichnet, daß die Granulat-Grünkörper in einer Formpresse zu größeren Form-Grünkörpern verpreßt werden, um fladen-, zylinder-, pellet-, brikett-, splitt-förmige, bruchstückartige od. dgl. geformte Schaumglas-Formkörper zu bilden.

8. Verfahren nach einem der Ansprüche 1 bis 7, dadurch gekennzeichnet, daß die Schaumglas-Formkörper in einem Drehrohrofen verschäumt werden.

9. Verfahren nach einem der Ansprüche 1 bis 8, dadurch gekennzeichnet, daß das Wasser zur Bildung der Binder-Schlempe in einer derartigen Menge zugegeben wird, daß der Feuchtigkeitsgehalt der aus Binder-Schlempe und Glasmehl gebildeten feuchten Grünmischung zwischen 3% und 20% liegt.

10. Verfahren nach einem der Ansprüche 1 bis 9, dadurch gekennzeichnet, daß bezogen auf die gesamte Menge der feuchten Grünmischung folgende Anteile der einzelnen Grund-Bestandteile eingesetzt werden:
- Glasmehl, insbesondere Altglasmehl 70% bis 95%
- Glas-Binder 2% bis 12%
- Treibmittel 0,2% bis 2,5%
- Wasser 3% bis 20%.

## Claims

1. A method for the production of foam glass bodies, in particular of foam glass pellets, comprising the following steps:
- mixing a glass binder with water and a blowing agent for a free flowing binder grout to form,
- working the free flowing binder grout into glass powder, preferably used glass powder, for a moist green mix to form,
- molding the moist green mix for green bodies to form, and
- foaming the green bodies in a furnace into foam glass bodies, characterized in that finely ground crushed glass with a alkali oxide content of preferably more than 16% is used as a glass binder, the crushed glass being solubilized by being stirred with hot water and dissolving.

2. A method according to claim 1, characterized in that for the formation of the moist green mix together with the binder grout and for the formation of the green bodies, the glass powder is added into a mixer, preferably a plough-share mixer or spray mixer, to which the binder grout is metered so that preferably fine-grained green pellets form.

3. A method according to claim 1, characterized in that for the formation of the moist green mix and for the formation of the green bodies, the glass powder and the binder grout are jointly placed into a disk pelletizer so that preferably coarse-grained green pellets form.

4. A method according to claim 2, characterized in that the green pellets are placed into a disk pelletizer where size enlargement of the green pellets takes place by the addition of further binder grout and further glass powder.

5. A method according to one of claims 2 to 4, characterized in that an outer layer is applied to the green pellets by means of a disk pelletizer, the properties of the outer layer differing from the basic properties of the green pellets.

6. A method according to claim 5, characterized in that a less foamable skin, a release film, a dye film and/or an enamel film are applied as an outer layer.

7. A method according to one of claims 2 to 4, characterized in that in a molding press, the green pellets are shaped into bigger molded green pellets, constituting foam glass bodies in the form of flat cakes, cylinders, pellets, briquets, chips, fragments or the like.

8. A method according to one of claims 1 to 7, characterized in that the foam glass bodies are foamed in a revolving tubular furnace.

9. A method according to one of claims 1 to 8, characterized in that the water for the production of the binder grout is added in such a quantity that the moisture content of the moist green mix formed from binder grout and glass powder ranges between 3 % and 20 %.

10. A method according to one of claims 1 to 9, characterized in that related to the entire quantity of moist green mix, the following portions of the individual basic components are used:
- glass powder, in particular used glass powder: 70 % to 95 %
- glass binder: 2 % to 12 %
- blowing agent: 0.2 % to 2.5 %
- water: 3 % to 20 %.

## Revendications

1. Procédé pour la préparation de corps de verre cellulaire, en particulier de verre cellulaire granulé, comportant les étapes opératoires suivantes :
- mélange d'un liant de verre avec de l'eau et un agent gonflant pour la formation d'une bouillie de liant fluide;
- introduction de la bouillie de liant fluide dans du verre pulvérisé, de préférence du vieux verre pulvérisé, pour la formation d'un mélange cru humide ;
- formage du mélange cru humide pour la formation de corps crus ; et
- transformation en mousse des corps crus dans un four en corps de formage de verre cellulaire, caractérisé en ce qu'en tant que liant de verre, on utilise des morceaux de verre finement broyés avec une proportion d'oxyde alcalin de préférence supérieure à 16 %, morceaux de verre broyés qui, sous agitation, sont désagrégés avec de l'eau chaude et entrent en solution.

2. Procédé selon la revendication 1, caractérisé en ce que pour la formation du mélange cru humide, le verre pulvérisé est introduit avec la bouillie de liant et pour le formage de corps crus, il est introduit dans un mélangeur, de préférence un mélangeur à soc de charrue ou mélangeur de pulvérisation, dans lequel la bouillie de liant est ajoutée de façon dosée afin de former des corps crus granulés, de préférence à fine granulométrie.

3. Procédé selon la revendication 1, caractérisé en ce que pour le formage du mélange cru humide et pour le formage des corps crus, on introduit le verre pulvérisé et la bouillie de liant conjointement dans une cuve de granulation de façon à former des corps crus granulés, de préférence à granulométrie grossière.

4. Procédé selon la revendication 2, caractérisé en ce que les corps crus granulés sont introduits dans une cuve de granulation où s'effectue, par addition de bouillie de liant supplémentaire et de verre pulvérisé supplémentaire, un grossissement granulométrique des corps crus granulés.

5. Procédé selon l'une des revendications 2 à 4, caractérisé en ce qu'au moyen d'une cuve de granulation, on applique une couche extérieure se distinguant par ses propriétés des propriétés de base des corps crus granulés sur les corps crus granulés.

6. Procédé selon la revendication 5, caractérisé en ce qu'en tant que couche extérieure, on applique une pellicule extérieure moins apte au moussage, une couche d'agent de séparation, une couche de peinture et/ou une couche de vitrification.

7. Procédé selon l'une des revendications 2 à 4, caractérisé en ce que les corps crus granulés sont comprimés dans une presse de formage pour donner des corps moulés crus de plus grande dimension pour former des corps moulés de verre cellulaire aplatis, cylindriques en forme de boulettes, de briquettes, d'éclats, de fragments ou analogues.

8. Procédé selon l'une des revendications 1 à 7, caractérisé en ce que les corps de verre cellulaire moulés sont transformés en mousse dans un four tubulaire rotatif.

9. Procédé selon l'une des revendications 1 à 8, caractérisé en ce que l'on ajoute de l'eau pour la formation de la bouillie de liant dans une quantité telle que la teneur en humidité du mélange cru humide constitué par la bouillie de liant et de verre pulvérisé se situe entre 3 % et 20 %.

10. Procédé selon l'une des revendications 1 à 9, caractérisé en ce que l'on met en oeuvre les proportions suivantes des différents constituants de base, rapportées à la quantité totale du mélange cru humide :
- verre pulvérisé, en particulier vieux verre pulvérisé 70 % à 95 %
- liant de verre 2 % à 12 %
- agent gonflant 0,2 % à 2,5 %
- eau 3 % à 20 %.
